Europäisches Patentamt

European Patent Office

Office européen des brevets

(19)

(11) Publication number: **0 358 311**

**A1**

(12) **EUROPEAN PATENT APPLICATION**

(21) Application number: 89306687.8

(51) Int. Cl.⁵: **G01B 21/06 , B65H 23/30**

(22) Date of filing: 30.06.89

(30) Priority: 01.07.88 DK 3653/88

(43) Date of publication of application:
**14.03.90 Bulletin 90/11**

(84) Designated Contracting States:
**AT BE DE GB LU NL**

(71) Applicant: **Rockwool International A/S**
**501, Hovedgaden**
**DK-2640 Hedehusene(DK)**

(72) Inventor: **Bernitt, Erik Sigfred Jakobsen**
**Elmehoj 3**
**DK-2605 Bronby(DK)**

(74) Representative: **Lawrence, Peter Robin**
**Broughton et al**
**GILL JENNINGS & EVERY 53-64 Chancery**
**Lane**
**London WC2A 1HN(GB)**

(54) **Apparatus for measuring speed and length of a web, which is conveyed on a transporting device.**

(57) Apparatus for measuring the rate and/or length of longitudional travel of a web 8 which is conveyed on a transporting device comprises a support 1 which is stationary relative to the transporting device, a rotatable measuring device 6 mounted on the support for rotational contact with the web, and means for calculating the said rate and/or length in response to the rotation of the rotatable measuring device, and the rotatable measuring device 6 is longitudinally slidably mounted (3,4) on the support and there is a motor 5 for driving the rotatable measuring device 6 and there are means for controlling the power to the motor such that longitudinal displacement of the rotable measuring device results in the power being reduced or increased in accordance with the longitudinal displacement to maintain the support in a substantially fixed longitudinal position.

*Fig. 1*

**Apparatus for measuring speed and length of a web, which is conveyed on a transporting device.**

The present invention relates to an apparatus for measuring speed and length of a web, which is conveyed on a transporting device, in which apparatus signals received from a measuring device in dependence of its speed of rotation are transmitted to a calculating unit, the measuring device being mounted on a support for movement with the web.

In measuring the speed of a length of material, it is common practice for a measuring roll incorporating an impulse generator to run on the surface of the web of material, thereby recording the length, which has passed the measuring roll. This type of measurement is sufficiently accurate when the surface of the web is relatively firm and homogeneous and the web of material advances at a substantially constant speed.

Certain materials, such as light quality mineral wool, do not meet these requirements. However, in controlling cutting machines, there is a demand for accurate measurement of the advanced length in such a way that a corresponding accuracy is attainable in the process of cutting off the pieces of material. To attain great accuracy it is necessary to work with high impulse frequency, and it is mandatory to reduce the pressure between the measuring roll and the web of material to such a degree that compression of the material during the passage of the measuring roll will be negligible. Under such circumstances the possibility of attaining a sufficient energy transmission between the web of material and the measuring roll for driving a high frequency impulse generator will be reduced, which is a prerequisite for the attainment of high accuracy.

The object of the present invention is to provide an apparatus with a limited pressure per square unit and with minimal displacement forces between the web of material and the measuring roll, possibly distributed over a relatively large area, with which apparatus it is possible to measure the speed and length of the web of a soft and resilient material.

This object is attained by means of an apparatus for measuring of speed and advanced length of a web, which is conveyed on a transporting device, in which apparatus signals received from a measuring roll in dependence of its speed of rotation are transmitted to a calculating unit, the measuring roll being mounted on a shaft having a mechanical connection with the transporting device characterised in that the measuring roll is driven by means of an electric motor, the mechanical connection between the measuring roll and the transporting device allowing a limited displacement of the shaft of the measuring roll with respect to the transporting device, said displacement being arranged for controlling the supply of power to the motor in such a way that the supply of energy is refuced or increased in accordance with the displacement of the shaft in the direction of the conveying or in the opposite direction.

In more detail, the preferred embodiment according to the invention is an apparatus for measuring the rate and/or length of longitudinal travel of a web which is conveyed on a transporting device, the apparatus comprising a support which is stationary relative to the transporting device, a rotatable measuring device mounted on the support for rotational contact with the web, and means for calculating the said rate and/or length in response to the rotation of the rotatable measuring device, characterised in that the rotatable measuring device is slidably mounted on the support to be longitudinally slidable relative to the support, the apparatus also includes a motor for driving the rotable measuring device and there are means for controlling the power to the motor such that longitudinal displacement of the rotable measuring device results in the power being reduced or increased in accordance with the longitudinal displacement to maintain the support in a substantially fixed longitudinal position.

Thus the calculation of the rate and/or length is derived only indirectly from the rotation of the measuring device, and can be derived from, for instance, the variation in power necessary to keep the rotation of the device at the speed of travel of the web, or from longitudinal displacement of the measuring device.

As the measuring roll or other device has an independent drive, there will normally be no energy transmission between the web of material and the measuring roll, as the friction between them only has to overcome accelerating forces, if any, on the measuring roll and a possible friction in the mechanical linking between the measuring roll and the transporting device. The energy supply drives the motor in the roll with a speed equivalent to the speed with which the web of material is advancing, and the displacement of the roll relative to the transporting device adapts the energy supply in such a way that the measuring roll will actually be stationary with respect to the transporting device.

Preferred embodiments of the apparatus according to the present invention will appear from the dependent claims. For instance it is possible to provide the measuring roll as a type of caterpillar tracks having a relatively great area of support in contact with the web of material and a correspondingly small specific contact pressure, in such a way that the deformation of the web will be very small. The large contact area levels out the effect of possible inhomogenities of the surface of the web.

The invention will be described in detail in the following with reference to the drawing, in which

fig. 1 shows an embodiment of the apparatus, where the measuring roll is constructed as an endless band, and

fig. 2 the apparatus according to fig.1 and viewed from the end.

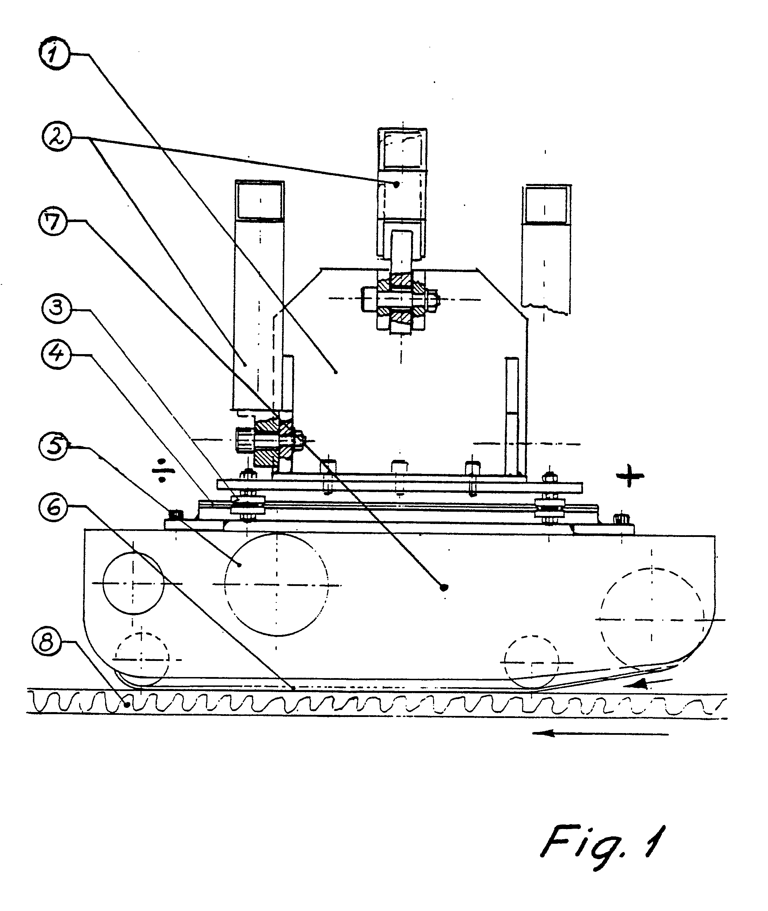

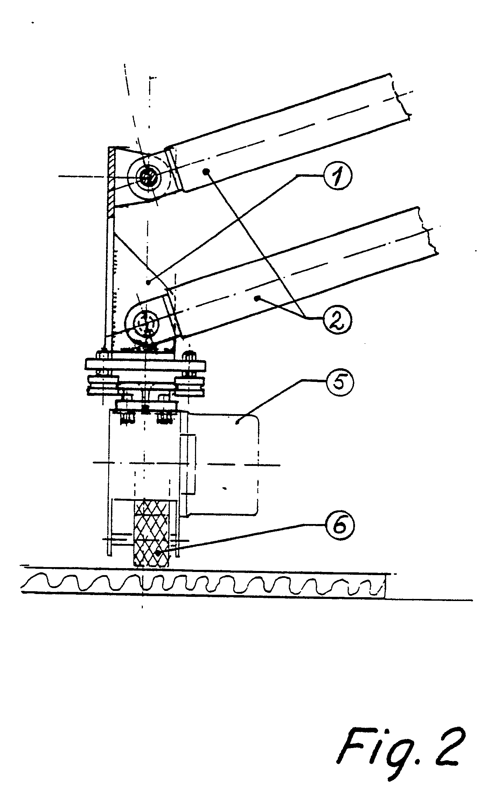

The embodiment of the measuring roll according to the invention shown in figs. 1 and 2 comprises a console or support 1, by means of which the measuring roll 6 is mechanically connected to a (not shown) transporting device for a web of material 8. The mechanical connection may comprise swingarms 2 enabling an upwards and downwards movement of the apparatus, in such a way that the measuring roll can be used for webs of material with different thicknesses. On the console 1 a number of rolls 3 with a circumferential groove are mounted, in which groove a rail 4 is guided. The rail 4 is part of a frame 7 on which is mounted a motor 5, which drives an endless band 6. The endless band 6 passes around a number of rolls, in such a manner that it rests on the web of material 8 with a relatively long and substantially planar surface, and serves as the measuring device.

In fig. 2 the vertically displacable suspension of the measuring roll and the motor 5, which drives the measuring roll, can be seen more clearly.

The mode of operation of the measuring roll is:

The supply of energy to the motor 5 is controlled by means of a controller (not shown in detail) which records the position of the frame 7 in relation to the console 1. If the supply of energy is just sufficient for driving the measuring roll with a speed which exactly corresponds to the advancing of the web of material, there will be no need for control. If the supply of energy is so ample that the measuring roll will move faster than the web of material, the measuring device will transmit a control signal reducing or modifying the supply of energy in such a way that the speed of the measuring roll is adjusted to equal the speed of the web of material. Conversely, if the speed of the measuring roll is insufficient for following the web of material, the controller transmits a signal, which increases or modifies the supply of energy in such a way that the speed of the measuring roll will be increased.

The motor is able to drive a high frequency impulse generator, generating an output, which has a frequency high enough for achieving the desired accuracy in measuring the speed of the web and the advanced length. The controller may be constructed in such a way that the frame of the measuring roll in operation actually is placed in the same position relative to the console except for short periods, where a modification of the speed of the web of material has just taken place.

It is possible to transmit a signal indicating the actual displacement of the console with respect to the frame to the computer carrying out the necessary signal conversion for calculating the speed and the advanced length of the web of the material. The computer may be programmed to transmit signals for controlling a cutting process or any other process being performed on the web of material dependent on the speed or advanced length of the web.

Several types of controllers may be used. A kind of non-touching sensor working magnetically may be used or an optical sensing of the position for the measuring roll relative to the console may be arranged. Both possibilities are characteristic by being free of friction, as it is considered of importance for the accuracy of the apparatus to reduce the friction between the measuring wheel and the console as much as possible.

The motor which may be stationary with respect to the transporting devices may be a simple DC-motor, the speed of which is controlled by changing the supplied voltage. In this case a potentiometer will be applicable as a controller for the displacement of the frame 7 with respect to the console 1. In this case the motor or one of the rolls of the band 6 may drive an impulse generator.

However, it is possible to let the motor be a step motor or synchronous motor, the supply of energy in this case being an impulse generator, the output of which is a pulsating current or an alternating voltage, the frequency of which is adjusted in dependence of the desired supply of energy. In such an arrangement it is possible to let the pulsating current directly control the computer, which calculates the speed and the advanced length.

In the arrangment shown the measuring roll is constructed as an endless band providing a relatively large contact area between the web of material and the measuring roll. This arrangement is particularly well suited for webs of a relatively soft and not quite smooth material, such as webs of light mineral wool. The large contact surface distributes the pressure over such an area that the yielding of the mineral wool caused by the measuring roll will be minimized, at the same time making it possible to achieve such a degree of friction that there will be no difficulties overcoming the friction at the rolls 4 and the inertial forces even in case of relatively abrupt changes in the speed of the web of material. In practice the described apparatus has turned out to be capable of controlling the cutting of slabs of mineral wool with an accuracy, which is far beyond the accuracy achieved by means of conventoinal passive measuring rolls.

To reduce the mass of the part of the measuring roll, which is displaceable in relation to the transporting device, it is possible to mount the driving motor on the transporting device and use a flexible shaft or a driving belt for driving the measuring roll. The reduced mass of the measuring roll will enable it to react more effectively to jerkwise movements of the web of material.

For measuring the speed of a web of mineral wool, an endless band having a width of 25mm and a length of the contact surface of approximately 320mm has been used. The total area of contact is therefore approximately 80cm$^2$. The contact pressure is controlled by means of a relieving device for the swing arms 2 in order to prevent a substantial deformation of the surface of the web of mineral wool. The total contact pressure may be 1-5kg, preferably approximately 2kg. The band of the measuring roll may preferably be provided with a pattern of grooves, which prevents foreign bodies from acting as friction-reducing rolls between the web of material and the band.

## Claims

1. Apparatus for measuring the rate and/or length of longitudinal travel of a web which is conveyed in a transporting device, the apparatus comprising a support 1 which is stationary relative to the transporting device, a rotatable measuring device 6 mounted on the support for rotational contact with the web, and means for calculating the said rate and/or length in response to the rotation of the rotatable measuring device, characterised in that the rotatable measuring device 6 is slidably mounted on the support to be longitudinally slidable relative to the support, the apparatus also includes a motor 5 for driving the rotatable measuring device and there are means for controlling the power to the motor such that longitudinal displacement of the rotatable measuring device results in the power beingreduced or increased in accordance with the longitudinal displacement to maintain the support in a substantially fixed longitudinal position.

2. Apparatus according to claim 1 wherein a signal corresponding to the degree of longitudinal displacement of the rotatable measuring device is transmitted to a computer calculating the rate and/or length of longitudinal travel of the web on the basis of signals received from the rotatable measuring device.

3. Apparatus according to claim 1 or claim 2 wherein the rotatable measuring device comprises an endless band conveyed over a number of rolls.

4. Apparatus according to any preceding claim wherein the displacement of the rotatable device is measured by optical means.

5. Apparatus according to any preceding claim wherein the displacement of the rotatable measuring device is measured by means of a non-touching sensor.

6. Apparatus according to any preceding claim wherein the driving motor of the rotatable measuring device is stationary with respect to the transporting device.

7. Apparatus according to any preceding claim wherein the energy supply for the motor is an impulse generator, the impulse frequency of which is controlled according to the energy requirements of the motor, the impulses further being supplied to the computer for calculation of the rate and/or length of the longitudinal travel.

8. Apparatus according to any preceding claim wherein the motor further drives an impulse generator the output of which is transmitted to the calculating means.

9. Apparatus for measuring of speed and advanced length of a web, which is conveyed on a transporting device, in which apparatus signals received from a measuring roll in dependence of its speed of rotation are transmitted to a calculating unit, the measuring roll being mounted on a shaft having a mechanical connection with the transporting device, characterised in that the measuring roll is driven by means of an electric motor, the mechanical connection between the measuring roll and the transporting device allowing a limited displacement of the shaft of the measuring roll with respect to the transporting device, said displacement being arranged for controlling the supply of power to the motor in such a way that the supply of energy is reduced or increased in accordance with the displacement of the shaft in the direction of the conveying or in the opposite direction.

*Fig. 1*

*Fig. 2*

| DOCUMENTS CONSIDERED TO BE RELEVANT | | EP 89306687.8 |

| Category | Citation of document with indication, where appropriate, of relevant passages | Relevant to claim | CLASSIFICATION OF THE APPLICATION (Int. Cl.4) |
|---|---|---|---|
| X | DE - A1 - 2 927 751 (RÖLLE) * Totality * | 1,3,4, 6,7,9 | G 01 B 21/06 B 65 H 23/30 |
| A | US - A - 4 400 882 (THORNTON) * Totality * | 1,2,9 | |
| A | DE - C - 594 986 (SPREYER) * Totality * | 1,3,9 | |

| | TECHNICAL FIELDS SEARCHED (Int. Cl.4) |
| | B 65 H 7/00 B 65 H 23/00 B 65 H 26/00 G 01 B 5/00 G 01 B 7/00 G 01 B 21/00 |

The present search report has been drawn up for all claims

| Place of search | Date of completion of the search | Examiner |
|---|---|---|
| VIENNA | 04-12-1989 | TOMASELLI |